# EUROPÄISCHE PATENTSCHRIFT

(11) **EP 3 374 180 B1**
(45) Veröffentlichungstag und Bekanntmachung des Hinweises auf die Patenterteilung: **23.09.2020**
(21) Anmeldenummer: 16793755.6
(22) Anmeldetag: 08.11.2016
(51) Int. Cl.: B32B 23/04, B32B 25/02, B32B 25/04, B32B 25/08, B32B 25/20, B32B 27/30, B32B 27/32, B32B 27/34, B32B 27/36, B32B 27/40, C08J 3/28

(54) **HAFTVERBUND**
ADHESIVE COMPOSITE
COMPOSITE ADHÉSIF

(30) Priorität: 13.11.2015 DE 202015106142 U
(43) Veröffentlichungstag der Anmeldung: 19.09.2018
(73) Patentinhaber: REHAU AG + Co, 95111 Rehau (DE)
(72) Erfinder: EIBL, Stefan, 95028 Hof (DE); SCHMIDT, Steven, 95182 Döhlau (DE); MÜLLER, Jörg, 95028 Hof (DE)
(86) Internationale Anmeldenummer: PCT/EP2016/001846
(87) Internationale Veröffentlichungsnummer: WO 2017/080643

(56) Entgegenhaltungen:
- US-A- 5 238 975
- US-A- 6 103 812
- US-A1- 2014 083 604

## Beschreibung

Die Erfindung betrifft einen Haftverbund aus einer ersten Schicht, die ein thermoplastisches Polymermaterial enthält oder aus einem solchen besteht und / oder die ein duroplastisches Polymermaterial enthält oder aus einem solchen besteht, und wenigstens einer damit verbundenen zweiten Schicht aus einem Silikonkautschuk.

Weiterhin betrifft die Erfindung ein Bauteil mit wenigstens einem Haftverbund der beschriebenen Art.

Es ist außerordentlich schwierig, einen Verbund aus einem thermoplastischen Polymermaterial und / oder einem duroplastischen Polymermaterial und einem Silikonkautschuk im Extrusionsverfahren herzustellen. Oftmals wird dazu ein Abschnitt aus einem Silikonkautschuk durch Einpressen, Einschieben oder Einlegen mit einem entsprechend gestalteten Bauteil aus einem Polymermaterial hergestellt.

Es gibt auch vielerlei Ansätze, durch einen Klebeprozess ein thermoplastisches oder eine duroplastisches Polymermaterial mit einem Silikonkautschuk zu verbinden. US 2014/083604 A1 beschreibt einen Artikel aus Polymermaterial mit vielen Schichten und ein Herstellverfahren dafür. Auf eine Vielzahl von Thermoplasten und Duroplasten wird ein Elastomer haftend angeordnet, wobei das Elastomer, beispielsweise Silikonkautschuk, durch einen Prozess, bei dem Energie einer ungehärteten Silikonpolymerzusammensetzung zugeführt wird, gehärtet und damit vernetzt wird. Die für den Vernetzungsprozess zugeführte Energie kann in Form von Wärmeenergie oder durch Einwirkung von Strahlung, wie Röntgen-, Gamma-, UV-, Licht-, Elektronenstrahlung oder einer Kombination der vorstehenden eingesetzt werden. US 6 103 812 A und US 5 238 975 A offenbaren Klebstoffe mit Zusätzen, wodurch die Klebstoffe durch Mikrowellen härtbar gemacht werden.

Im Falle einer Coextrusion eines thermoplastischen oder duroplastischen Polymermaterials mit einer Vorstufe eines Silikonkautschuks, einer Silikonpolymerzusammensetzung, die nicht gehärtet ist, ist die Situation noch ungemein schwieriger.

Für heißvulkanisierende Silkonpolymerzusammensetzungen ist dazu das Extrudat durch einen Ofen zu leiten, um dort durch die Vulkanisation die Bildung des Silikonkautschuks zu erreichen. Dabei wird allerdings das thermoplastische oder duroplastische Polymermaterial der dort herrschenden hohen Temperatur ausgesetzt. Dies kann zu Verformungen, zum Abtropfen oder zu anderen dauerhaften Schädigungen des Polymermaterials der ersten Schicht führen.

Hier setzt die Erfindung ein, die es sich zur Aufgabe gemacht hat, einen Haftverbund anzugeben, der eine erste Schicht, die ein thermoplastisches Polymermaterial enthält oder aus einer solchen besteht und / oder die ein duroplastisches Polymermaterial enthält oder aus einem solchen besteht, und wenigstens eine damit verbundene zweite Schicht aus einem Silikonkautschuk aufweist.
Der Haftverbund soll einfach herstellbar sein und eine dauerhafte Anbindung des Silikonkautschuks am Polymermaterial der ersten Schicht gewährleisten.

Eine weitere Aufgabe der vorliegenden Erfindung ist es, ein Bauteil anzugeben, welches einen solchen Haftverbund aufweist.

Die Lösung der ersten Aufgabe, einen Haftverbund zur Verfügung zu stellen, erfolgt gemäß Anspruch 1.

Vorteilhafte Weiterbildungen und bevorzugte Ausführungen der Erfindung ergeben sich aus den Unteransprüchen.

Im Rahmen der vorliegenden Erfindung wurde erkannt, dass ein Haftverbund aus einer ersten Schicht, die ein thermoplastisches Polymermaterial enthält oder aus einem solchen besteht und / oder die ein duroplastisches Polymermaterial enthält oder aus einem solchen besteht, und wenigstens einer damit verbundenen zweiten Schicht aus einem Silikonkautschuk, der Partikel enthält, die durch Einwirkung von Energie aus einem Magnetfeld und / oder einer Quelle, die elektromagnetische Strahlung abgibt, Wärmeenergie erzeugen, dann sehr vorteilhaft zur Verfügung gestellt werden kann, wenn der Haftverbund erhältlich ist durch ein Verfahren, das folgende Schritte aufweist:
(a) Bereitstellen der ersten Schicht,
(b) Anordnen einer ungehärteten Silikonpolymerzusammensetzung, die die genannten Partikel enthält, die durch Einwirkung von Energie aus einem Magnetfeld und / oder einer Quelle, die elektromagnetische Strahlung abgibt, Wärmeenergie erzeugen, als zweite Schicht an der ersten Schicht,
(c) Einwirkenlassen von Energie aus einem Magnetfeld und / oder einer Quelle, die elektromagnetische Strahlung abgibt, auf die Partikel, wobei Wärmeenergie erzeugt wird und die Silikonpolymerzusammensetzung zum Silikonkautschuk vernetzt mit einem Vernetzungsgrad von zumindest mehr als 50 %.

Mit einem solchen erfindungsgemäßen Haftverbund werden die Nachteile, die aus dem Stand der Technik bekannt sind, in einfacher Weise überwunden.

Im vorstehenden Erfindungszusammenhang ist unter "ungehärtete Silikonpolymerzusammensetzung" eine solche zu verstehen, die durch Formgebungsverfahren, wie beispielsweise ein Extrusionsverfahren oder ein Coextrusionsverfahren oder ein thermoplastisches Pultrusionsverfahren oder ein Pressverfahren oder ein anderes Verfahren, in eine bestimmte Form gebracht werden kann. Das Material ist in diesem Zustand formbar. Dies schließt nicht aus, dass in der ungehärteten Silikonpolymerzusammensetzung bereits eine Anvernetzung oder eine Vernetzung zu einem geringen Grad vorliegt.
Demgegenüber ist unter "vernetzt" zu verstehen, dass der geformte Körper dann formstabil ist, also der Vernetzungsgrad soweit erhöht worden ist, zumindest auf mehr als 50 %, dass durch ein Formgebungsverfahren keine dauerhafte Formveränderung mehr möglich ist. Der Körper aus dem vernetzten Silikonkautschuk weist dann elastomere Eigenschaften auf.

Der erfindungsgemäße Haftverbund ist in einfacher Weise herstellbar, indem die erste Schicht beispielsweise im Rahmen eines Extrusionsverfahrens, eines Spritzgussverfahrens oder eines Pressverfahrens aus einem thermoplastischen und / oder duroplastischen Polymermaterial bereitgestellt wird.

Eine ungehärtete Silikonpolymerzusammensetzung kann als zweite Schicht beispielsweise durch ein Coextrusionsverfahren an der ersten Schicht angeordnet werden.

Die ungehärtete Silikonpolymerzusammensetzung enthält erfindungsgemäß Partikel, die durch Einwirkung von Energie aus einem Magnetfeld und / oder einer Quelle, die elektromagnetische Strahlung abgibt, Wärmeenergie erzeugen.

Schließlich lässt man Energie aus einem Magnetfeld und / oder einer Quelle, die elektromagnetische Strahlung abgibt, auf die Partikel, die in der ungehärteten Silikonpolymerzusammensetzung der zweiten Schicht enthalten sind, einwirken. Hierbei wird Wärmeenergie lokal in dieser zweiten Schicht erzeugt und die Silikonpolymerzusammensetzung wird zum Silikonkautschuk vernetzt, wobei ein Vernetzungsgrad von zumindest mehr als 50 % erreicht wird.
Überraschenderweise wurde gefunden, dass diese Wärmeenergie ausreichend ist, um an der Grenzfläche zwischen Thermoplast und Silikonpolymerzusammensetzung, den Thermoplast weiter anzuschmelzen, so dass sich eine Grenzschicht aus Thermoplast und Silikonzusammensetzung ausbildet, was sich positiv auf den Haftverbund auswirkt.

Hierdurch ist in einfacher Weise der Haftverbund der vorliegenden Erfindung bereitgestellt.

Es hat sich im Rahmen der vorliegenden Erfindung als äußerst günstig erwiesen, wenn vorgesehen ist, dass das thermoplastische Polymermaterial der ersten Schicht ausgewählt ist aus einem Polyolefinhomo- und / oder Polyolefincopolymer, vorzugsweise einem Polypropylen (PP) oder einem Polyethylen (PE) oder einem Polybutylen (PB), einem cyclischen Polyolefincopolymer (COC, COP), einem vernetzten Polyolefin, vorzugsweise einem vernetzten Polyethylen (PE-X), einem Poly-alpha-Olefin-Copolymer, einem Polyolefinelastomer, einem lonomer, einem Polyvinylchlorid, einem Polyamid, einem Polyamid-Copolymer, einem Polyester, einem Polyester-Copolymer, einem Polystyrol, einem Polystyrol-Copolymer, einem Methylmethacrylat-Acrylnitril-Butadien-Styrol-Copolymer, einem Acrylester-Styrol-Acrylnitril-Copolymer, einem Styrol-Acrylnitril-Copolymer, einem Styrol-Methylmethacrylat-Copolymer, einem Polycarbonat, einem Acrylatharz, einem Acrylatcopolymer (EBA, EMA), einem Polymethylmethacrylat, einem Poly(meth)acrylat einem Polyphenylensulfon, einem Polysulfon, einem Polyethersulfon, einem Polyphenylenoxid, einem Polyphenylensulfid, einem Polyacetat, einem Polyacetat-Copolymer, einem Polyacetal (POM), einem Polyurethan, einem Polyether, einem Polyetherimid, einem Polyamidimid, einem Polyimid, einem thermoplastischem Polyimid, einem Polyphthalamid, einem Polyketon, Polyetherketon, Polyetheretherketon, einem Polyetherketonketon, einem Polyaryletherketon, einem Fluorhomopolymer, einem Fluorcopolymer, einem fluorhaltigen Polyurethan, einem Polyxylen, einem flüssigkristallinem Polymer, einem Cellulosepolymer, einer Polymilchsäure, einem Polymer aus nachwachsenden Rohstoffen, einem Hochleistungsthermoplast, einem thermoplastischen Elastomer, welches als Homo- und / oder Copolymer vorliegt, ausgewählt aus TPO = Thermoplastische Elastomere auf Olefinbasis, TPV = Vernetzte thermoplastische Elastomere auf Olefinbasis, TPU = Thermoplastische Elastomere auf Urethanbasis, TPE-E = Thermoplastische Polyesterelastomere, TPE-S = Styrol-Blockcopolymere (SBS, SEBS, SEPS, SEEPS und MBS), TPE-A = Thermoplastische Copolyamide, z.B. PEBAX, einem vernetzten oder teilvernetzten Thermoplast oder einem solchen Elastomer, einem aus diesen durch Pfropfung mit Amino- und / oder Imino- und / oder Amido- und / oder Epoxy- und / oder Hydroxy- und / oder Carbonsäure- und / oder Sulfonsäure- und / oder Methacrylsäure- und / oder Maleinsäureanhydridgruppen modifizierten Polymer und / oder einer aus diesen herstellbaren Mischung und / oder einem aus diesen herstellbaren Copolymerisat und / oder einer aus diesen herstellbaren Mischzusammensetzung.

Ebenfalls hat es sich im Rahmen der vorliegenden Erfindung als äußerst günstig erwiesen, wenn vorgesehen ist, dass das duroplastische Polymermaterial der ersten Schicht ausgewählt ist aus einem zu einem Duroplasten vernetzbaren Präpolymer und / oder Harz, ausgewählt aus einem Phenolharz und / oder einem Epoxidharz und / oder einem Phenol-Epoxid-Harz und / oder einem Benzoxazinharz und / oder einem Cyanatharz und / oder einem Melaminharz und / oder einer aus diesen herstellbaren Mischung und / oder einem aus diesen herstellbaren Copolymerisat und / oder einer aus diesen herstellbaren Mischzusammensetzung.

Durch die erfindungsgemäße Technik, dass die Wärmeenergie durch die Partikel in der Silikonpolymerzusammensetzung erzeugt wird, wird die erste Schicht des thermoplastischen und / oder duroplastischen Polymermaterials thermisch geschont. Dadurch ist es möglich, dass insbesondere die o. g. thermoplastischen Polymermaterialien für die Herstellung des Haftverbundes genutzt werden können.

Als sehr vorteilhaft hat sich bei der vorliegenden Erfindung erwiesen, wenn die Silikonpolymerzusammensetzung ausgewählt ist aus einem peroxid- und / oder einen additions- und / oder einem kondensationsvernetzenden System.

Die Auswahl der Silikonpolymerzusammensetzung aus den o. g. Systemen ermöglicht es, dass der erfindungsgemäße Haftverbund in einer maßgeschneiderten Weise genau nach den technischen Anforderungen oder den Wünschen des Kunden hergestellt werden kann.

In einer Fortentwicklung der vorliegenden Erfindung kann vorgesehen sein, dass die Silikonpolymerzusammensetzung wenigstens eine haftvermittelnde Komponente enthält.

Die haftvermittelnde Komponente in der Silikonpolymerzusammensetzung kann ausgewählt sein aus einem Thermoplasten und / oder einem Silikonkautschuk und / oder einem Silikonkautschuk-Thermoplast-Hybridsystem und / oder haftvermittelnden Additiven. Auch eine Mischzusammensetzung der vorgenannten Komponenten kann als haftvermittelnde Komponente vorgesehen sein.

Haftvermittelnde Additive können ausgewählt sein aus hydrophilen und / oder organofunktionellen Silikoncopolymeren und / oder silikonhaltigen Pfropfcopolymeren und / oder linearen oder verzweigten Silikon-Blockcopolymeren und / oder linearen und / oder verzweigten Polysiloxanen und / oder linearen und / oder verzweigten Vinylhydrogenpolysiloxanen und / oder silikonhaltigen Gelen und / oder silikonhaltigen Präpolymeren und / oder linearen und / oder verzweigten vinylfunktionellen Polysiloxanen und / oder SiH-funktionellen Polysiloxanen und / oder Silazanen und / oder Silanen und / oder Siloxanen und / oder silanterminierten und / oder silylierten Polyethern und / oder silanterminierten und / oder silylierten Polyurethanen und / oder silanterminierten und / oder silylierten Polyacrylaten und / oder fluorhaltigen Polymeren und / oder fluorhaltigen Copolymeren und / oder Fluorsilikatverbindungen und / oder Fluorsilanverbindungen und / oder Fluoralkylacrylate und / oder Fluoralkylmethacrylate und / oder Fluoralkylalkohole und / oder Fluoralkylester und / oder Fluoralkylolefine und / oder Fluorsilane und / oder Fluorsilikone und / oder Fluorsilikate und / oder Mischungen hiervon.

Die vorstehend erwähnten organofunktionellen Silikoncopolymere und / oder silikonhaltigen Pfropfcopolymere und / oder linearen oder verzweigten Silikon-Blockcopolymere und / oder linearen und / oder verzweigten Polysiloxane und / oder linearen und / oder verzweigten Vinylhydrogenpolysiloxane sind beispielsweise Organopolysiloxan-Polyharnstoff-Blockcopolymere und / oder Organopolysiloxan-Polyurethan-Blockcopolymere und / oder silikonmodifizierte Polyacrylate und / oder silikonmodifizierte Urethanacrylate und / oder polyethermodifizierte Silikone und / oder Silikon-Polyacrylat-Hybride mit zusätzlichen reaktiven Gruppen, wie Hydroxy- und / oder Epoxy- und / oder Carboxyl- und / oder Amino- und / oder Vinylgruppen in der Polymerkette.

Die Fluorsilikatverbindung kann ausgewählt sein aus bzw. kann umfassen: Tris(pentafluorethyl)difluorsilikat und / oder Bis(pentafluorethyl)trifluorsilikat und / oder Tri(n-heptafluorpropyl)difluorsilikat und / oder Bis(n-heptafluorpropyl)trifluorsilikat und / oder Tris(n-nonafluorbutyl)difluorsilikat und / oder Bis(n-nonafluorbutyl)trifluorsilikat und / oder Tris(n-tridecafluorhexyl)difluorsilikat und / oder Bis(n-tridecafluorhexyl)trifluorsilikat.

Haftvermittelnde Additive können aber auch ausgewählt sein aus maleinsäureanhydrid- und / oder glycidylmethaycrylat gepfropften und / oder copolymersierten Polymeren, Polyurethanen und / oder Epoxidharzen und / oder Acrylat- und / oder Urethanacrylatharzen und / oder Cyanacrylatharzen und / oder ungesättigten Polyesterharzen und / oder Phenolharzen und / oder Polyimidklebstoffen und / oder Cyanatharzen und / oder Benzoxazinharzen und / oder Hybridharzen und / oder Mischungen hiervon.

Unter Silanen - wie sie vorstehend als haftvermittelnde Additive genannt sind - sind beispielhaft zu verstehen:
Allyltrialkoxysilane, Allyldialkoxysilane, Allylmonoalkoxysilane, Undecenyltrialkoxysilane, Vinyltrialkoxysilane, Vinyldialkoxysilane, Vinylmonoalkoxysilan, Tetraalkoxysilan, Trialkoxysilan, Glcidyloxypropylalkoxysilan, Aminosilane, 3-Mercaptopropyltrialkoxysilane.

### Beispiele hierfür sind:

Vinyltrimethoxysilan und / oder Vinyltriethoxysilan und / oder Vinyltriisopropoxysilan und / oder Vinyltributoxysilan und / oder Vinyl-tris(2-methoxyethoxy)silan und / oder Vinyl-tris(2-ethoxyethoxy)silan und / oder Vinyldimethylmethoxysilan und / oder Vinyldimethoxysilan und / oder Vinylphenyldimethoxysilan und / oder Vinylphenyldiethoxysilan und / oder Vinyldiethoxysilan und / oder Vinylmethyldiethoxysilan und / oder Vinylphenylmethylmethoxysilan und / oder Allyltrimethoxysilan und / oder Allyldimethoxysilan und / oder Allylmethyldimethoxysilan und / oder Allyltriethoxysilan und / oder Allyldimethoxysilan und / oder Allylmethyldimethoxysilan und / oder Allyldiethoxysilan und / oder Allylmethyldiethoxysilan und / oder Undecenyltrimethoxysilan und / oder Allyloxyundecyltrimethoxysilan und / oder 1,3-Diallyltetramethyldisiloxan und / oder Vinyltriacetoxysilan und / oder 1,3-Divinyltetramethyldisiloxan und / oder Vinyltetramethyldisiloxan und / oder 1,3-Divinyltetraphenyldisiloxan und / oder 3-Glycidyloxypropyltrimethoxysilan und / oder 3-Glycidyloxypropyltriethoxysilan und / oder N-Trimethoxysilylmethyl-O-methyl-carbamat und / oder N-Dimethoxy(methyl)silylmethyl-O-methylcarbamat und / oder N-Methyl[3-(trimethoxysilyl)-propyl]carbamat und / oder 3-Aminopropyltrimethoxysilan und / oder N-(2-aminoethyl)-3-aminopropyltrimethoxysilan und / oder N-(n-Butyl)aminopropyltrimethoxysilan und / oder Bis(3-triethoxysilylpropyl)amin und / oder Bis(3-trimethoxysilylpropyl)amin und / oder oligomere Amino/Alkyl-Alkoxysilane und / oder Perfluoroctyltriethoxysilan und / oder Trifluorpropylsilan und / oder Polyfluoralkylsilane.

Unter Siloxanen - wie sie vorstehend als haftvermittelnde Additive genannt sind - sind beispielhaft zu verstehen:
Polydimethylmethylhydrogensiloxane, trimethylsiloxyterminierte Dimethylsiloxancopolymere, hydridoterminierte Polydimethylsiloxane, trimethylsiloxyterminierte Polymethylhydrosiloxane, lineare α, 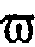 -Dihydropolydimethylsiloxane, cyclische Polymethylhydrogensiloxane, cyclische Polydimethylmethylhydrogensiloxane.

Es hat sich bei der vorliegenden Erfindung als sehr nützlich erwiesen, wenn die Partikel, die durch Einwirkung von Energie aus einem Magnetfeld und / oder einer Quelle, die elektromagnetische Strahlung abgibt, Wärmeenergie erzeugen, magnetische und / oder paramagnetische und / oder ferromagnetische und / oder ferrimagnetische und / oder antiferrimagnetische und / oder superparamagnetische Eigenschaften aufweisen und ausgewählt sind aus Metallen und / oder Metalloxiden und / oder Mischmetalloxiden und / oder Metallkomplexverbindungen und / oder Metallcarbonylverbindungen, insbesondere Eisencarbonylverbindungen, wie beispielsweise Pentacarbonyleisen und / oder Metallsalzverbindungen und / oder Metallnitridverbindungen, wie beispielsweise Eisennitrid, und / oder Metallverbindungen und / oder Metallzusammensetzungen und / oder Metalllegierungen, insbesondere ferromagnetischen Legierungen und Heuslerschen Legierungen.

Die Partikel enthalten Metalle, wie Aluminium, Kobalt, Eisen oder Nickel. Weiterhin geeignet sind Partikel aus metallischen Legierungen und / oder Heuslerschen Legierungen, ausgewählt aus AINiCo, SmCo, Nd₂Fe₁₄B, Ni₈₀Fe₂₀ (Permalloy), NiFeCo (Mumetall) Cu₂MnAl, Cu₂MnIn, Cu₂MnSn,Ni₂MnAl, Ni₂MnIn, Ni₂MnSn, Ni₂MnSb, Ni₂MnGa, Co₂MnAl, Co₂MnSi, Co₂MnGa, Co₂MnGe,Pd₂MnAl, Pd₂MnIn, Pd₂MnSn, Pd₂MnSb,Co₂FeSi, Co₂FeAl, Fe₂VAl, Mn₂VGa, Co₂FeGe.

Die Partikel können aus Metalloxiden einer einheitlichen Modifikation oder in verschiedenen Modifikationen bestehen. Die Metalloxide können als Mischoxid wenigstens zweier Metalle mit den Metallkomponenten Lithium, Natrium, Magnesium, Calcium, Strontium, Barium, Titan, Zirkonium, Hafnium, Vanadium, Niob, Tantal, Chrom, Molybdän, Wolfram, Mangan, Eisen, Ruthenium, Osmium, Cobalt, Rhodium, Iridium, Nickel, Platin, Palladium, Kupfer, Silber, Gold, Zink, Cadmium, Aluminium, Gallium, Indium, Zinn, Samarium, Europium, Gadolinium, Lanthan, Cer, Praseodym, Dysprosium, Holmium, Erbium, Thulium, Terbium Ytterbium ausgebildet sein.

Beispiele hierfür sind ZnFe₂O₄, MnFe₂O₄, Mn_{0,6}Fe_{0,4}Fe₂O₄, Mn_{0,5}Zn_{0,5}Fe₂O₄, Zn_{0,1}Fe_{1,9}O₄, Zn_{0,2}Fe_{1,8}O₄, Zn_{0,3}Fe_{1,7}O₄, Zn_{0,4}Fe_{1,6}O₄, Mn_{0,39}Zn_{0,27} Fe_{2,34}O₄, MgFe₂O₃, Mg_{1,2}Mn_{0,2}Fe_{1,6}O₄, Mg_{1,4}Mn_{0,4}Fe_{1,2}O₄, Mg_{1,6}Mn_{0,6}Fe_{0,8}O₄, Mg_{1,8}Mn_{0,8}Fe_{0,4}O₄,Fe₂O₃, Fe₃O₄, CoFe₂O₄, MnFe₂O₄, CuFe₂O₄, ZnFe₂O₄, NiFe₂O₄, MgFe₂O₄, CaFe₂O₄, SrFe₁₂O₁₉, BaFe₁₂O₁₉, CdFe₂O₄, oder Mangan-Zink-Ferrite der allgemeinen Zusammensetzung MnₐZn₍₁₋ₐ₎Fe₂O₄, oder Mangan-Cadmium-Ferrite der allgemeinen Zusammensetzung MnₐCd₍₁₋ₐ₎Fe₂O₄ oder Nickel-Zink-Ferrite der allgemeinen Zusammensetzung NiₐZn₍₁₋ₐ₎Fe₂O₄.

Weiterhin sind für die Partikel Eisenkomplexverbindungen, Eisencarbonylverbindungen, wie Pentacarbonyleisen, Eisensalze sowie Eisennitrid Fe₄N geeignet. Ebenfalls geeignet ist auch Mangannitrid Mn₄N.

Die Partikelgröße ist dabei kleiner 200 µm, wobei dies Nanopartikel der Größe 1 bis 100 nm einschließt. Bevorzugt ist eine Partikelgröße im Bereich von 20 nm bis 50 µm. Bevorzugt sind dabei agglomeratfreie Nanopartikel, die beschichtet oder unbeschichtet sind. Besonders bevorzugt sind mikrowellenabsorptionbefähigte Partikel mit einer Curie-Temperatur, die höher ist, als die Härtungstemperatur der Zusammensetzung, also die Temperatur, die benötigt wird, die ungehärtete Silikonpolymerzusammensetzung zu vernetzen.

Die Partikel können eine ein- oder mehrlagige Oberflächenbeschichtung aufweisen.
Hierzu können ionogene, ionische oder nichtionische oberflächenaktive Gruppen auf der Oberfläche vorgesehen sein. Alternativ können haftvermittelnde Verbindungen die Oberfläche beschichten. Diese haftvermittelnden Verbindungen können ausgewählt sein aus ungesättigte Fettsäuren und / oder Acrylaten und / oder Urethanen und / oder Polyestern und / oder Polyethern und / oder Urethanacrylaten und / oder Cyanmethylacrylaten und / oder Cyanoethylacrylaten und / oder Cyanomethylmethacrylaten und / oder Cyanoethylmethacrylaten und / oder (Meth)acrylsäurederivaten und / oder Epoxyharzen und / oder Silikonen und / oder Silikoncopolymeren und / oder linearen oder verzweigten Vinylhydrogenpolysiloxanen und / oder hydrophilen und / oder organofunktionellen Silikoncopolymeren und / oder silikonhaltigen Pfropfcopolymeren und / oder linearen oder verzweigten Silikon-Blockcopolymeren und / oder verzweigten Polysiloxanen und / oder silikonhaltigen Gelen und / oder silikonhaltigen Präpolymeren und / oder vinylfunktionellen Polysiloxanen und / oder SiH-funktionellen Polysiloxanen und / oder Silazanen und / oder Silanen und / oder Siloxanen und / oder Mischungen hiervon.

Beispielsweise können als haftvermittelnde Verbindungen Organopolysiloxan-Polyharnstoff-Blockcopolymere und / oder Organopolysiloxan-Polyurethan-Blockcopolymere und / oder silikonmodifizierte Polyacrylate und / oder silikonmodifizierte Urethanacrylate und / oder polyethermodifizierte Silikone und / oder Silikon-Polyacrylat-Hybride mit zusätzlichen reaktiven Gruppen, wie Hydroxy- und / oder Epoxy- und / oder Carboxyl- und / oder Amino- und / oder Vinylgruppen in der Polymerkette und / oder silanterminierte und / oder silylierte Polyether, und / oder silanterminierte Polyurethane und / oder silylierte Polyurethane und / oder silanterminierte Polyacrylaten und / oder silylierten Polyacrylaten verwendet werden.

Unter Silanen - wie sie vorstehend als Oberflächenbeschichtung der Partikel genannt sind - sind beispielhaft zu verstehen:
Allyltrialkoxysilane, Allyldialkoxysilane, Allylmonoalkoxysilane, Undecenyltrialkoxysilane, Vinyltrialkoxysilane, Vinyldialkoxysilane, Vinylmonoalkoxysilan, Tetraalkoxysilan, Trialkoxysilan, Glcidyloxypropylalkoxysilan, Aminosilane, 3-Mercaptopropyltrialkoxysilane.

Beispiele hierfür sind Vinyltrimethoxysilan und / oder Vinyltriethoxysilan und / oder Vinyltriisopropoxysilan und / oder Vinyltributoxysilan und / oder Vinyl-tris(2-methoxyethoxy)silan und / oder Vinyl-tris(2-ethoxyethoxy)silan und / oder Vinyldimethylmethoxysilan und / oder Vinyldimethoxysilan und / oder Vinylphenyldimethoxysilan und / oder Vinylphenyldiethoxysilan und / oder Vinyldiethoxysilan und / oder Vinylmethyldiethoxysilan und / oder Vinylphenylmethylmethoxysilan und / oder Allyltrimethoxysilan und / oder Allyldimethoxysilan und / oder Allylmethyldimethoxysilan und / oder Allyltriethoxysilan und / oder Allyldimethoxysilan und / oder Allylmethyldimethoxysilan und / oder Allyldiethoxysilan und / oder Allylmethyldiethoxysilan und / oder Undecenyltrimethoxysilan und / oder Allyloxyundecyltrimethoxysilan und / oder 1,3-Diallyltetramethyldisiloxan und / oder Vinyltriacetoxysilan und / oder 1,3-Divinyltetramethyldisiloxan und / oder Vinyltetramethyldisiloxan und / oder 1,3-Divinyltetraphenyldisiloxan und / oder 3-Glycidyloxypropyltrimethoxysilan und / oder 3-Glycidyloxypropyltriethoxysilan und / oder N-Trimethoxysilylmethyl-O-methyl-carbamat und / oder N-Dimethoxy(methyl)silylmethyl-O-methylcarbamat und / oder N-Methyl[3-(trimethoxysilyl)-propyl]carbamat und / oder 3-Aminopropyltrimethoxysilan und / oder N-(2-aminoethyl)-3-aminopropyltrimethoxysilan und / oder N-(n-Butyl)aminopropyltrimethoxysilan und / oder Bis(3-triethoxysilylpropyl)amin und / oder Bis(3-trimethoxysilylpropyl)amin und / oder oligomere Amino/Alkyl-Alkoxysilane Unter Siloxanen - wie sie vorstehend als Oberflächenbeschichtung der Partikel genannt sind - sind beispielhaft zu verstehen:
Polydimethylmethylhydrogensiloxane, trimethylsiloxyterminierte Dimethylsiloxancopolymere, hydridoterminierte Polydimethylsiloxane, trimethylsiloxyterminierte Polymethylhydrosiloxane, lineare α, 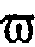 -Dihydropolydimethylsiloxane, cyclische Polymethylhydrogensiloxane, cyclische Polydimethylmethylhydrogensiloxane.

Zur Oberflächenmodifizierung eignen sich auch Halogensilane sowie Halogenorganosilane.

Auch Kern-Hülle-Verbindungen sind einsetzbar. Die Hülle kann ein amorphes Siliciumdioxid und / oder ein Silikat und / oder eine pyrogene Kieselsäure und / oder gefällte Kieselsäure und / oder Kieselsäure bilden, den Kern ein oder mehrere magnetische Metalloxide.
Die Kern-Hülle-Partikel können in oberflächenmodifizierter Form vorliegen.
Die Einarbeitbarkeit in das organische Medium der Silikonpolymerzusammensetzung kann erleichtert werden, wenn eine Oberflächenmodifizierung vorgesehen ist.
Dabei können funktionelle Gruppen bei der Oberflächenmodifizierung vorgesehen sein. Die mit auf der Oberfläche der Kern-Hülle-Partikel vorhandenen reaktionsfähigen Gruppen können unter Anbindung an die Silikonpolymere chemisch reagieren oder mit diesen chemisch und / oder physikalisch wechselwirken. Die Anbindung kann kovalent, unter Ausbildung einer koordinativen Bindung, oder einer ionischen Bindung, durch Wechselwirkungen, wie beispielsweise durch Dipol-Dipol-Wechselwirkungen, durch polare Wechselwirkungen, durch Wasserstoffbrückenbindungen, durch van-der-Waals-Wechselwirkungen, durch ionogene, durch ionische, durch nichtionische oberflächenaktive Gruppen, erfolgen.

Besonders bevorzugt sind Kern-Hülle-Partikel mit einem Eisenoxidgehalt von 60 bis 90 Gew.%. Die Dicke der Hülle kann 5 bis 100 nm betragen und eine poröse und / oder gefaltete und / oder fibrilläre Oberflächenstruktur aufweisen.

Durch die Auswahl der Zusammensetzung der Partikel kann in einfacher Weise eine gewünschte Anpassung an die Energiequelle wie auch an die durch die Partikel erzeugte Wärmeenergie vorgenommen werden.

Es hat sich als günstig herausgestellt, wenn vorgesehen ist, dass der Anteil an Partikeln in der Silikonpolymerzusammensetzung 2 bis 40 Gew.-%, bevorzugt 5 bis 35 Gew.-% und besonders bevorzugt 8 bis 30 Gew.-% beträgt. Durch die Wahl des Anteils an Partikeln in der Silikonpolymerzusammensetzung kann in sehr differenzierter Weise den Anforderungen, die an den Haftverbund gestellt werden, Rechnung getragen werden.

Es hat sich in einer weiteren Fortbildung der vorliegenden Erfindung als sehr hilfreich erwiesen, wenn vorgesehen ist, dass zwischen der ersten Schicht und der zweiten Schicht eine Haftvermittlerschicht angeordnet ist.

Durch das Anordnen einer Haftvermittlerschicht zwischen der ersten Schicht und der zweiten Schicht beim erfindungsgemäßen Haftverbund kann eine besonders feste Verbindung zwischen der ersten Schicht und der zweiten Schicht hergestellt werden.

Die Haftvermittlerschicht kann dabei ein haftvermittelndes System mit reaktiven Gruppen sein, die wenigstens einschichtig ausgebildet ist.

Um die Haftung zwischen der ersten und der zweiten Schicht zu verbessern, kann weiterhin vorgesehen sein, eine Vorbehandlung der Oberfläche mittels UV-Behandlung, Beflammung, Coronaaktivierung, Plasmaaktivierung, durch ein Aerosolverfahren, mit einer Excimer-Lampe oder durch eine Mikrowellenanregung vorzunehmen.

Diese haftvermittelnde Schicht mit einer Dicke von beispielsweise < 0,5 mm kann eine entsprechend haftungsmodifizierte Silikonzusammensetzung sein, die frei ist von jenen Partikeln, die durch Einwirkung von Energie aus einem Magnetfeld und / oder einer Quelle, die elektromagnetische Strahlung abgibt, Wärme erzeugen. In dieser haftvermittelnden Schicht sind keine Treibmittel bzw. schaumbildenden Komponenten enthalten.

Die haftvermittelnde Schicht weist eine Polymerzusammensetzung aus einem Thermoplasten und / oder einem Silikonkautschuk und / oder einem Silikonkautschuk-Thermoplast-Hybridsystem und / oder einem haftvermittelnden Additiv auf. Auch eine Mischzusammensetzung der vorgenannten Komponenten kann als haftvermittelnde Komponente vorgesehen sein.

Die Polymerzusammensetzung der haftvermittelnden Schicht kann hydrophile und / oder organofunktionelle Silikoncopolymere und / oder silikonhaltige Pfropfcopolymere und / oder lineare oder verzweigte Silikon-Blockcopolymere und / oder lineare und / oder verzweigte Polysiloxane und / oder silikonhaltige Gele und / oder silikonhaltige Präpolymere und / oder vinylfunktionelle Polysiloxane und / oder SiH-funktionelle Polysiloxane und / oder Silazane und / oder Silane und / oder Siloxane und / oder silanterminierte und / oder silylierte Polyether, und / oder silanterminierte und / oder silylierte Polyurethane und / oder silanterminierte und / oder silylierte Polyacrylate und / oder Mischungen hiervon enthalten.

Die Polymerzusammensetzung der haftvermittelnden Schicht kann organofunktionelle Silikoncopolymere und / oder silikonhaltige Pfropfcopolymere und / oder lineare oder verzweigte Silikon-Blockcopolymere und / oder lineare und / oder verzweigte Polysiloxane enthalten, diese sind beispielsweise Organopolysiloxan-Polyharnstoff-Blockcopolymere und / oder Organopolysiloxan-Polyurethan-Blockcopolymere und / oder silikonmodifizierte Polyacrylate und / oder silikonmodifizierte Urethanacrylate und / oder polyethermodifizierte Silikone und / oder Silikon-Polyacrylat-Hybride mit zusätzlichen reaktiven Gruppen, wie Hydroxy- und / oder Epoxy- und / oder Carboxyl- und / oder Amino- und / oder Vinylgruppen in der Polymerkette.

Unter Silanen im vorgenannten Erfindungszusammenhang hinsichtlich der Polymerzusammensetzung der haftvermittelnden Schicht sind beispielhaft zu verstehen: Allyltrialkoxysilane, Allyldialkoxysilane, Allylmonoalkoxysilane, Undecenyltrialkoxysilane, Vinyltrialkoxysilane, Vinyldialkoxysilane, Vinylmonoalkoxysilan, Tetraalkoxysilan, Trialkoxysilan, Glcidyloxypropylalkoxysilan, Aminosilane, 3-Mercaptopropyltrialkoxysilane.

Beispiele hierfür sind Vinyltrimethoxysilan und / oder Vinyltriethoxysilan und / oder Vinyltriisopropoxysilan und / oder Vinyltributoxysilan und / oder Vinyl-tris(2-methoxyethoxy)silan und / oder Vinyl-tris(2-ethoxyethoxy)silan und / oder Vinyldimethylmethoxysilan und / oder Vinyldimethoxysilan und / oder Vinylphenyldimethoxysilan und / oder Vinylphenyldiethoxysilan und / oder Vinyldiethoxysilan und / oder Vinylmethyldiethoxysilan und / oder Vinylphenylmethylmethoxysilan und / oder Allyltrimethoxysilan und / oder Allyldimethoxysilan und / oder Allylmethyldimethoxysilan und / oder Allyltriethoxysilan und / oder Allyldimethoxysilan und / oder Allylmethyldimethoxysilan und / oder Allyldiethoxysilan und / oder Allylmethyldiethoxysilan und / oder Undecenyltrimethoxysilan und / oder Allyloxyundecyltrimethoxysilan und / oder 1,3-Diallyltetramethyldisiloxan und / oder Vinyltriacetoxysilan und / oder 1,3-Divinyltetramethyldisiloxan und / oder Vinyltetramethyldisiloxan und / oder 1,3-Divinyltetraphenyldisiloxan und / oder 3-Glycidyloxypropyltrimethoxysilan und / oder 3-Glycidyloxypropyltriethoxysilan und / oder N-Trimethoxysilylmethyl-O-methyl-carbamat und / oder N-Dimethoxy(methyl)silylmethyl-O-methylcarbamat und / oder N-Methyl[3-(trimethoxysilyl)-propyl]carbamat und / oder 3-Aminopropyltrimethoxysilan und / oder N-(2-aminoethyl)-3-aminopropyltrimethoxysilan und / oder N-(n-Butyl)aminopropyltrimethoxysilan und / oder Bis(3-triethoxysilylpropyl)amin und / oder Bis(3-trimethoxysilylpropyl)amin und / oder oligomere Amino/Alkyl-Alkoxysilane.

Unter Siloxanen im vorgenannten Erfindungszusammenhang hinsichtlich der Polymerzusammensetzung der haftvermittelnden Schicht sind beispielhaft zu verstehen: Polydimethylmethylhydrogensiloxane, trimethylsiloxyterminierte Dimethylsiloxancopolymere, hydridoterminierte Polydimethylsiloxane, trimethylsiloxyterminierte Polymethylhydrosiloxane, lineare α, 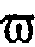 -Dihydropolydimethylsiloxane, cyclische Polymethylhydrogensiloxane, cyclische Polydimethylmethylhydrogensiloxane.

Haftvermittelnde Additive der haftvermittelnden Schicht können ausgewählt sein aus maleinsäureanhydrid- und / oder glycidylmethaycrylatgepfropften und / oder copolymersierten Polymeren, Polyurethanen und / oder Epoxidharzen und / oder Acrylat- und / oder Urethanacrylatharzen und / oder Cyanacrylatharzen und / oder ungesättigten Polyesterharzen und / oder Phenolharzen und / oder Polyimidklebstoffen und / oder Cyanatharzen und / oder Benzoxazinharzen und / oder Hybridharzen und / oder Mischungen hiervon.

Die haftvermittlelnde Schicht weist sowohl eine ausreichende Adhäsion zur Silikonelastomer-Schicht (zweite Schicht) als auch zur ersten Schicht, welche ein thermoplastisches Polymermaterial enthält oder aus einem solchen besteht und / oder ein duroplastisches Polymermaterial enthält oder aus einem solchen besteht, auf.
Die Haftung der haftvermittelnden Schicht zur Silikonelastomer-Schicht (zweite Schicht) und / oder zur ersten Schicht, welche ein thermoplastisches Polymermaterial enthält oder aus einem solchen besteht und / oder ein duroplastisches Polymermaterial enthält oder aus einem solchen besteht, erfolgt durch chemische Bindung und / oder ionische Bindung und / oder durch kovalente Bindung und / oder physikalische Wechselwirkungen und / oder durch Dipol-Dipol-Wechselwirkungen und / oder van-der-Waals-Wechselwirkungen und / oder durch Wasserstoff-Brückenbindungen.

Die Dicke der haftvermittelnden Schicht beträgt 10 nm bis 100 µm.

Das Aufbringen der haftvermittelnden Schicht auf die erste Schicht, welche ein thermoplastisches Polymermaterial enthält oder aus einem solchen besteht und / oder ein duroplastisches Polymermaterial enthält oder aus einem solchen besteht, erfolgt durch Koextrusion und / oder durch Beschichtung und / oder durch Walzen und / oder durch Beschichten in einem Tauchbad und / oder durch einen Sprühauftrag und / oder durch Tampondruck und / oder durch 3D-Druck und / oder durch Sputtern und / oder durch ein Plasmabeschichtungsverfahren und / oder allgemein durch ein physikalisches Beschichtungsverfahren.

Bei der vorliegenden Erfindung hat es sich als sehr vorteilhaft herausgestellt, wenn vorgesehen ist, dass die Energie aus einem Magnetfeld durch ein magnetisches Wechselfeld erzeugt ist oder dass die Quelle, die elektromagnetische Strahlung abgibt, eine Mikrowellenquelle oder eine Radiowellenquelle ist.

Besonders effektiv kann das induktive Erwärmen in einem mittelfrequenten Magnetfeld bei 30 Hz bis 100 kHz, bevorzugt bei 30 Hz bis 60 kHz vorgenommen werden.
Hochfrequente Magnetfelder von größer 100 kHz, bevorzugt von 400 bis 1000 kHz sind ebenfalls geeignet.

Der Energieeintrag kann auch durch eine elektromagnetische Mikrowellenstrahlung im Frequenzbereich von 100 MHz bis 200 GHz erfolgen.

Es ist hierdurch möglich, die Partikel, die gleichmäßig bzw. möglichst gleichmäßig verteilt in der zweiten Schicht der Silikonpolymerzusammensetzung vorliegen, in besonders effektiver Weise anzuregen und so Wärme zu erzeugen.
Da die Partikel in der Silikonpolymerzusammensetzung gleichmäßig bzw. möglichst gleichmäßig verteilt vorliegen, kann die durch die zugeführte Energie erzeugte Wärme an allen Stellen der Silikonpolymerzusammensetzung gleichzeitig einwirken und die Vernetzung starten bzw. deren Weiterreaktion bewirken.
Auf diese Weise erfolgt in der Silikonpolymerzusammensetzung an allen Stellen die Vernetzungsreaktion kinetisch und thermodynamisch kontrolliert, was zu verbesserten Materialeigenschaften führt und ein Nachtempern zur Steigerung des Vernetzungsgrades nicht mehr erforderlich macht. Erfindungsgemäß resultiert dadurch ein verbesserter Vernetzungsprozess der Silikonpolymerzusammensetzung zum Silikonkautschuk.

In einer weiteren Fortbildung der Erfindung ist vorgesehen, dass das thermoplastische Polymermaterial und / oder das duroplastische Polymermaterial der ersten Schicht und / oder der Silikonkautschuk der zweiten Schicht geschäumt sind. Hierzu sind den Materialien entsprechende Komponenten beigegeben, die die Schaumbildung verursachen.
Es ist auf diese Weise möglich, die Dichte der Materialien herabzusetzen und die Wärmeleitung zu verringern. Dies kann entscheidend sein bei Anwendungen, die sich auf das Leiten von heißen oder kalten Fluiden beziehen. Auch bei massekritischen Anwendungen, wie beispielsweise in der Luftfahrt, ergeben sich Vorteile beim Einsatz eines solchen erfindungsgemäßen Haftverbundes aus einem oder zwei geschäumten Materialien.

In einer weiteren Fortbildung der Erfindung ist vorgesehen, dass das thermoplastische Polymermaterial und / oder das duroplastische Polymermaterial der ersten Schicht und / oder der Silikonkautschuk der zweiten Schicht beispielsweise Flammschutz- und / oder Brandschutzadditive aufweisen, was sie für entsprechende Anwendungen besonders prädestiniert.

Es können in einer weiteren Fortbildung der Erfindung auch Additive zur Verbesserung der thermischen und / oder elektrischen Leitfähigkeit dem thermoplastischen Polymermaterial und / oder dem duroplastischen Polymermaterial der ersten Schicht und / oder dem Silikonkautschuk der zweiten Schicht beigegeben sein, was Vorteile bei Anwendungen in dieser Richtung bietet.

Weiterhin ist es möglich, Fasern bzw. Whisker, die aus Keramik, Glas, Kunststoffen oder Kohlenstoff, Naturstoffen oder aus nachwachsenden Rohstoffen bestehen, dem thermoplastischen Polymermaterial und / oder dem duroplastischen Polymermaterial der ersten Schicht und / oder dem Silikonkautschuk der zweiten Schicht beizufügen, um die Eigenschaften des Haftverbundes zu optimieren.

Von Vorteil ist es auch, dem thermoplastischen Polymermaterial und / oder dem duroplastischen Polymermaterial der ersten Schicht und / oder dem Silikonkautschuk der zweiten Schicht Polymerfasern in Form von Geweben, Gelegen oder Gewirken oder als Geflecht zuzugeben, wodurch besonders feste Haftverbunde zugänglich sind.

Ebenso ist es möglich, durch Zugabe von Hohlkugeln, insbesondere Mikrohohlglaskugeln, durch pulverförmig Additive, wie beispielsweise Talkum, Wollastonit, Montmorillonit, Bentonit, Talkum, Kreide, Kohlenstoff, Ruß oder Graphit zum thermoplastischen Polymermaterial und / oder zum duroplastischen Polymermaterial der ersten Schicht und / oder dem Silikonkautschuk der zweiten Schicht ganz besondere Eigenschaften beim Haftverbund zu erreichen.

Weiterhin ist es möglich bandförmige Verstärkungselemente, beispielsweise aus Metallen oder aus Kohlenstofffasern dem thermoplastischen Polymermaterial und / oder dem duroplastischen Polymermaterial der ersten Schicht und / oder dem Silikonkautschuk der zweiten Schicht beizufügen, um die Wärmeleitfähigkeit und / oder die Steifigkeit des Bauteils zu optimieren.

Schließlich können das thermoplastische Polymermaterial und / oder das duroplastische Polymermaterial der ersten Schicht und / oder der Silikonkautschuk der zweiten Schicht auch Weichmacher, Füllstoffe, Antioxidationsmittel und / oder Materialen, die einen UV-Schutz generieren, beinhalten, und so an die technischen Notwendigkeiten oder die Wünsche des Kunden angepasst werden.

Die weitere Aufgabe der vorliegenden Erfindung, ein Bauteil anzugeben, erfährt ihre Lösung in Anspruch 9.

Es wurde erkannt, dass ein Bauteil dann ganz besonders vorteilhaft nutzbar ist, wenn vorgesehen ist, dass dieses wenigstens einen Haftverbund, wie vorstehen beschrieben, aufweist.

Es hat sich als sehr günstig erwiesen, wenn das Bauteil in Form einer Dichtung oder eines Schlauches, insbesondere eines Flechtschlauches oder eines Kantenelements oder eines Verschlussteiles oder eines Profils ausgebildet ist.

Durch die besondere Auswahl der Polymermaterialien für die Schichten des Haftverbundes gemäß vorliegender Erfindung weist dieser auch eine hohe Temperaturbeständigkeit auf, was die Möglichkeiten seines Einsatzes noch erweitert.

Insbesondere ergeben sich so Anwendungen in Automobilen, in Flugzeugen, in Schiffen und in Schienenfahrzeugen.

Der Haftverbund findet in einer Ausbildung als Schlauch im großen Umfang Anwendung zur Aufnahme, Speicherung und zum Leiten von Fluiden in Transportmitteln, Gebäuden, Apparaten und Maschinen. So ist es damit möglich, beispielsweise eine Fluidversorgung und insbesondere eine Trinkwasserversorgung in einem Gebäude, in einem Wohn- oder Arbeitscontainer, aber auch in einem Transportmittel, wie beispielsweise in einem Wohnwagen, in einem Wohnmobil, in einem Zugwaggon, in einem Flugzeug, auf einem Schiff und dergleichen aufzubauen. Auch die thermisch isolierte Leitung eines Fluids ist so möglich. Der Haftverbund in Form einer Dichtung kann vorteilhaft bei Scheibeneinfassungen in den genannten Automobilen, Flugzeugen, Schiffen und Schienenfahrzeugen eingesetzt werden. Insbesondere kann so den Forderungen nach Knick-, Diffusions- und Druckbeständigkeit entsprochen werden, bei gleichzeitig hoher vorhandener Flexibilität.
Weiterhin kann der Haftverbund als Dichtung oder als Profil sehr vorteilhaft in Maschinen und Apparaten eingesetzt werden, um dort insbesondere unter engen Platzverhältnissen in engen Radien verlegt zu werden, wie dies beispielsweise bei Geräten der Hausgerätetechnik, wie u. a. in Kühlgeräten, Geschirrspülmaschinen, Waschmaschinen, Bügeleisen, Kaffeemaschinen, Getränkespendern und dergleichen notwendig ist.
Auch in technischen Geräten, die Fluide aufnehmen, speichern und leiten, kann der erfindungsgemäße mehrschichtige Schlauch vorteilhaft zum Einsatz kommen.
Geräte dieser Art sind beispielsweise spanende Bearbeitungszentren zum Bohren, Drehen und Fräsen von Werkstoffen, Kühlanlagen, Klimaanlagen und anderes mehr.

Weitere wichtige Merkmale und Vorteile der Erfindung ergeben sich aus den Unteransprüchen, aus den Figuren und aus der zugehörigen Figurenbeschreibung.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Figuren dargestellt und werden in der nachfolgenden Beschreibung näher erläutert.

Die vorliegende wird anhand der beigefügten Figuren wie folgt näher beschrieben.

Hierzu zeigt:
- Fig. 1: eine schematische Darstellung, wie durch ein Einwirken von Energie die Herstellung des Haftverbundes erfolgt, wobei die ungehärtete Silikonpolymerzusammensetzung zum Silikonkautschuk vernetzt wird;
- Fig. 2: eine schematische Querschnittsansicht eines Haftverbundes in Form eines Profils mit einer Lippe und
- Fig. 3: eine schematische teilweise geschnittene perspektivische Ansicht eines Haftverbundes, der als Schlauch ausgebildet ist.

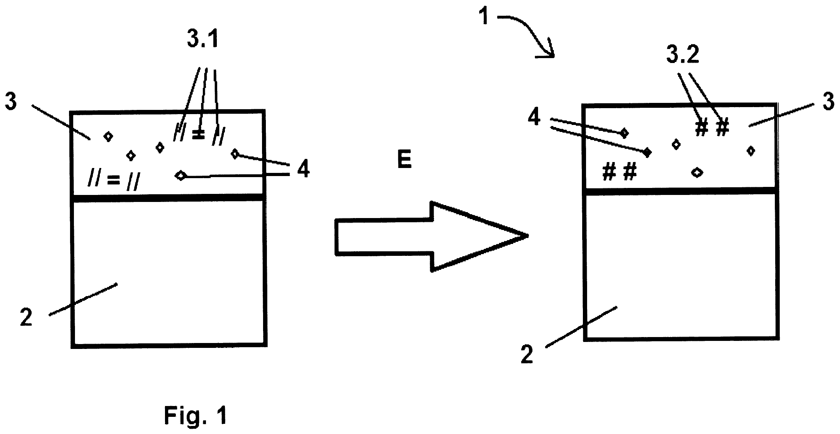

In Fig. 1 ist in einer schematischen Darstellung gezeigt, wie durch Einwirken von Energie E die Herstellung eines Haftverbundes 1 erfolgt.
Hierbei wird die ungehärtete Silikonpolymerzusammensetzung, das ungehärtete Material 3.1, zum Silikonkautschuk, dem vernetzten Material 3.2, vernetzt.

Zur Verdeutlichung ist in der Fig. 1 zunächst links in schematischer Weise ein Bauteil in einer Querschnittsansicht gezeigt, das eine erste Schicht 2 aufweist, die ein thermoplastisches Polymermaterial enthält bzw. aus einem solchen besteht.

An einer Seite der ersten Schicht 2 ist eine zweite Schicht 3 angeordnet. Die zweite Schicht 3 enthält das ungehärtete Material 3.1, eine ungehärtete Silikonpolymerzusammensetzung.

In der zweiten Schicht 3 sind in der ungehärteten Silikonpolymerzusammensetzung Partikel 4 homogen verteilt. Die Partikel 4 können durch Einwirkung von Energie aus einem Magnetfeld oder eine Quelle, die elektromagnetische Strahlung abgibt, Wärmeenergie erzeugen.

In Fig. 1 ist weiterhin gezeigt, dass nach Einwirkenlassen von Energie E der Haftverbund 1 erhalten wird. Beim Haftverbund 1, der in der Fig. 1 in der rechten Seite dargestellt ist, ist die erste Schicht 2, die aus einem thermoplastischen Polymermaterial besteht bzw. ein solches enthält, unverändert.

Die zweite Schicht 3 enthält neben den Partikeln 4 vernetztes Material 3.2, den vernetzten Silikonkautschuk.

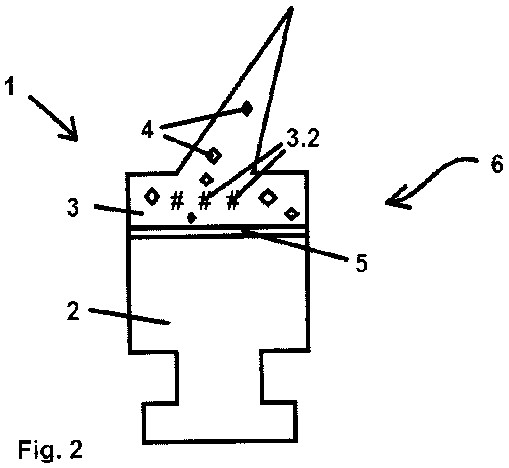

In Fig. 2 ist in einer schematischen Querschnittsansicht ein Haftverbund 1 in Form eines Profils mit einer Lippe dargestellt. Der Haftverbund 1 weist dazu eine erste Schicht 2 auf, die ein thermoplastisches Polymermaterial enthält bzw. aus einem solchen besteht.

Die erste Schicht 2 weist einen Fuß etwa in Form einer T-Struktur auf. An einer Seite der ersten Schicht 2 ist eine Haftvermittlerschicht 5 aufgetragen, die die Haftung des thermoplastischen Polymermaterials der ersten Schicht 2 zur zweiten Schicht 3 verbessert.

Angrenzend an die Haftvermittlerschicht 5 ist die zweite Schicht 3 angeordnet. In der zweiten Schicht 3, die mit der Haftvermittlerschicht und der ersten Schicht 2 fest verbunden ist, sind Partikel 4 etwa homogen verteilt.

In der zweiten Schicht 3 ist das vernetzte Material 3.2, der vernetzte Silikonkautschuk, enthalten. Die zweite Schicht 3 ist in Form einer Lippe mit einem Fuß ausgebildet, wobei der Fuß der Lippe an der Haftvermittlerschicht 5 angeordnet ist. Der Haftverbund 1 gemäß Fig. 2 bildet ein Bauteil 6, das beispielsweise als Dichtprofil verwendbar ist. Dieses Dichtprofil kann mit dem Fuß der ersten Schicht 2 an einer Haltestruktur, beispielsweise in einer Nut, befestigt werden, und wirkt dann mit seiner Lippe der zweiten Schicht 3 dichtend.

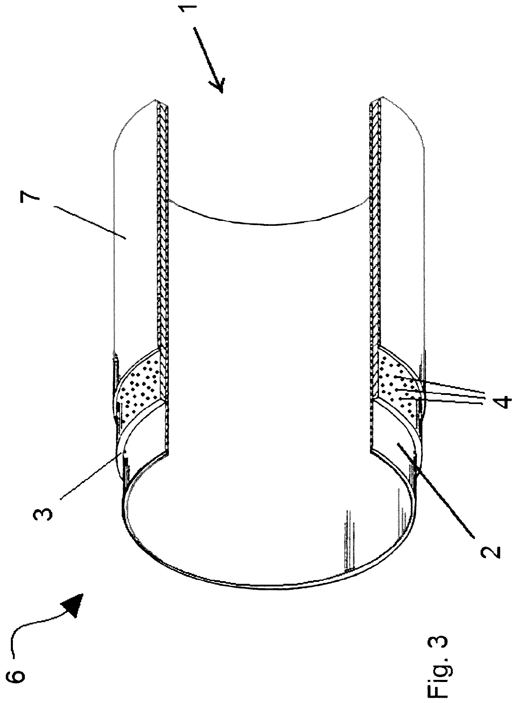

In Fig. 3 ist in einer schematischen teilweise geschnittenen perspektivischen Ansicht ein Haftverbund 1 gezeigt, der als Schlauch ausgebildet ist. Der Haftverbund 1 ist als Bauteil 6, hier in Form eines Schlauches, geformt.

Der Haftverbund 1 weist eine erste Schicht 2 auf, die die Innenwand des Schlauches bildet. Die erste Schicht 2 enthält ein thermoplastisches Polymermaterial bzw. besteht aus einem solchen.

An der Außenoberfläche der ersten Schicht 2 ist die zweite Schicht 3 angeordnet. Die zweite Schicht 3 enthält vernetztes Material 3.2, einen vernetzten Silikonkautschuk. In der zweiten Schicht 3 sind etwa homogen die Partikel 4 verteilt.

An der Außenoberfläche der zweiten Schicht 3 ist eine Schutzschicht 7 angeordnet. Die Schutzschicht 7 besteht beispielsweise aus einem Silikonkautschuk oder aus einem thermoplastischen Polymermaterial. Die Schutzschicht 7 schützt den Schlauch vor mechanischen, chemischen und anderen Einwirkungen.

Die in der Fig. 3 gezeigten Schichtdicken der ersten Schicht 2, der zweiten Schicht 3 und der Schutzschicht 7 sind nicht maßstäblich dargestellt, sondern dienen lediglich der Illustration der vorliegenden Erfindung.

Der Haftverbund 1 in Form eines Schlauches ist in einfacher Weise durch einen Coextrusionsprozess herstellbar.

### Bezugszeichenliste

- 1: Haftverbund
- 2: erste Schicht
- 3: zweite Schicht
- 3.1: ungehärtetes Material
- 3.2: vernetztes Material
- 4: Partikel
- 5: Haftvermittlerschicht
- 6: Bauteil
- 7: Schutzschicht
- E: Energie

## Patentansprüche

1. Haftverbund (1) aus einer ersten Schicht (2), die ein thermoplastisches Polymermaterial enthält oder aus einem solchen besteht und / oder die ein duroplastisches Polymermaterial enthält oder aus einem solchen besteht, und wenigstens einer damit verbundenen zweiten Schicht (3) aus einem Silikonkautschuk, wobei der Haftverbund (1) erhältlich ist durch ein Verfahren, folgende Schritte aufweisend:
(a) Bereitstellen der ersten Schicht (2),
(b) Anordnen einer ungehärteten Silikonpolymerzusammensetzung als zweite Schicht (3) an der ersten Schicht (2),
(c) Einwirkenlassen von Energie zur Vernetzung der Silikonpolymerzusammensetzung zum Silikonkautschuk,
**dadurch gekennzeichnet, dass**
die ungehärtete Silikonpolymerzusammensetzung Partikel (4) enthält, die durch Einwirkung von Energie aus einem Magnetfeld und / oder einer Quelle, die elektromagnetische Strahlung abgibt, Wärmeenergie erzeugen, wodurch die Silikonpolymerzusammensetzung zum Silikonkautschuk vernetzt wird mit einem Vernetzungsgrad von zumindest mehr als 50 %.

2. Haftverbund (1) nach Anspruch 1, **dadurch gekennzeichnet, dass** das thermoplastische Polymermaterial der ersten Schicht (2) ausgewählt ist aus einem Polyolefinhomo- und / oder Polyolefincopolymer, vorzugsweise einem Polypropylen (PP) oder einem Polyethylen (PE) oder einem Polybutylen (PB), einem cyclischen Polyolefincopolymer (COC, COP), einem vernetzten Polyolefin, vorzugsweise einem vernetzten Polyethylen (PE-X), einem Poly-alpha-Olefin-Copolymer, einem Polyolefinelastomer, einem lonomer, einem Polyvinylchlorid, einem Polyamid, einem Polyamid-Copolymer, einem Polyester, einem Polyester-Copolymer, einem Polystyrol, einem Polystyrol-Copolymer, einem Methylmethacrylat-Acrylnitril-Butadien-Styrol-Copolymer, einem Acrylester-Styrol-Acrylnitril-Copolymer, einem Styrol-Acrylnitril-Copolymer, einem Styrol-Methylmethacrylat-Copolymer, einem Polycarbonat, einem Acrylatharz, einem Acrylatcopolymer (EBA, EMA), einem Polymethylmethacrylat, einem Poly(meth)acrylat, einem Polyphenylensulfon, einem Polysulfon, einem Polyethersulfon, einem Polyphenylenoxid, einem Polyphenylensulfid, einem Polyacetat, einem Polyacetat-Copolymer, einem Polyacetal (POM), einem Polyurethan, einem Polyether, einem Polyetherimid, einem Polyamidimid, einem Polyimid, einem thermoplastischem Polyimid, einem Polyphthalamid, einem Polyketon, Polyetherketon, Polyetheretherketon, einem Polyetherketonketon, einem Polyaryletherketon, einem Fluorhomopolymer, einem Fluorcopolymer, einem fluorhaltigen Polyurethan, einem Polyxylen, einem flüssigkristallinem Polymer, einem Cellulosepolymer, einer Polymilchsäure, einem Polymer aus nachwachsenden Rohstoffen, einem Hochleistungsthermoplast, einem thermoplastischen Elastomer, welches als Homo- und / oder Copolymer vorliegt, ausgewählt aus TPO = Thermoplastische Elastomere auf Olefinbasis, TPV = Vernetzte thermoplastische Elastomere auf Olefinbasis, TPU = Thermoplastische Elastomere auf Urethanbasis, TPE-E = Thermoplastische Polyesterelastomere, TPE-S = Styrol-Blockcopolymere (SBS, SEBS, SEPS, SEEPS und MBS), TPE-A = Thermoplastische Copolyamide, z.B. PEBAX, einem vernetzten oder teilvernetzten Thermoplast oder einem solchen Elastomer, einem aus diesen durch Pfropfung mit Amino- und / oder Imino- und / oder Amido- und / oder Epoxy- und / oder Hydroxy- und / oder Carbonsäure- und / oder Sulfonsäure- und / oder Methacrylsäure- und / oder Maleinsäureanhydridgruppen modifizierten Polymeren und / oder einer aus diesen herstellbaren Mischung und / oder einem aus diesen herstellbaren Copolymerisat und / oder einer aus diesen herstellbaren Mischzusammensetzung, und / oder dass das duroplastische Polymermaterial der ersten Schicht (2) ausgewählt ist aus einem zu einem Duroplasten vernetzbaren Präpolymer und / oder Harz, ausgewählt aus einem Phenolharz und / oder einem Epoxidharz und / oder einem Phenol-Epoxid-Harz und / oder einem Benzoxazinharz und / oder einem Cyanatharz und / oder einem Melaminharz und / oder einer aus diesen herstellbaren Mischung und / oder einem aus diesen herstellbaren Copolymerisat und / oder einer aus diesen herstellbaren Mischzusammensetzung.

3. Haftverbund (1) nach Anspruch 1 oder 2, **dadurch gekennzeichnet, dass** die Silikonpolymerzusammensetzung ausgewählt ist aus einem peroxid- und / oder einem additions- und / oder einem kondensationsvernetzenden System.

4. Haftverbund (1) nach einem der vorangehenden Ansprüche, **dadurch gekennzeichnet, dass** die Silikonpolymerzusammensetzung wenigstens eine haftvermittelnde Komponente enthält, ausgewählt aus einem Thermoplasten und / oder einem Silikonkautschuk und / oder einem Silikonkautschuk-Thermoplast-Hybridsystem und / oder haftvermittelnden Additiven oder einer Mischzusammensetzung der Vorgenannten.

5. Haftverbund (1) nach einem der vorangehenden Ansprüche, **dadurch gekennzeichnet, dass** die Partikel (4) magnetische und / oder paramagnetische und / oder ferromagnetische und / oder ferrimagnetische und / oder antiferrimagnetische und / oder superparamagnetische Eigenschaften aufweisen und ausgewählt sind aus Metallen und / oder Metalloxiden und / oder Mischmetalloxiden und / oder Metallkomplexverbindungen und / oder Metallcarbonylverbindungen, insbesondere Eisencarbonylverbindungen, wie beispielsweise Pentacarbonyleisen, und / oder Metallsalzverbindungen und / oder Metallnitridverbindungen, wie beispielsweise Eisennitrid, und / oder Metallverbindungen und / oder Metallzusammensetzungen und / oder Metalllegierungen, insbesondere ferromagnetischen Legierungen und Heuslerschen Legierungen.

6. Haftverbund (1) nach einem der vorangehenden Ansprüche, **dadurch gekennzeichnet, dass** der Anteil an Partikeln in der Silikonpolymerzusammensetzung 2 bis 40 Gew.-%, bevorzugt 5 bis 35 Gew.-% und besonders bevorzugt 8 bis 30 Gew.-% beträgt.

7. Haftverbund (1) nach einem der vorangehenden Ansprüche, **dadurch gekennzeichnet, dass** zwischen der ersten Schicht (2) und der zweiten Schicht (3) eine Haftvermittlerschicht (5) angeordnet ist.

8. Haftverbund (1) nach einem der vorangehenden Ansprüche, **dadurch gekennzeichnet, dass** die Energie aus einem Magnetfeld durch ein magnetisches Wechselfeld erzeugt ist oder dass die Quelle, die elektromagnetische Strahlung abgibt, eine Mikrowellenquelle oder eine Radiowellenquelle ist.

9. Bauteil (6) mit wenigstens einem Haftverbund (1) nach einem der Ansprüche 1 bis 8.

10. Bauteil (6) nach Anspruch 9 in Form einer Dichtung oder eines Schlauches, insbesondere eines Flechtschlauches, oder eines Kantenelements oder eines Verschlussteiles oder eines Profils.

## Claims

1. Adhesive composite (1) of a first layer (2), which contains a thermoplastic polymer material or consists of such a material and / or which contains a thermosetting polymer material or consists of such a material, and at least one second layer (3) of a silicone rubber connected thereto, wherein the adhesive composite (1) is obtainable by a method having the following steps:
(a) provision of the first layer (2),
(b) arrangement of an uncured silicone polymer composition as a second layer (3) on the first layer (2),
(c) allowing the action of energy to cross-link the silicone polymer composition to form silicone rubber,
**characterised in that**
the uncured silicone polymer composition contains particles (4) which generate thermal energy due to the action of energy from a magnetic field and / or a source that emits electromagnetic radiation, whereby the silicone polymer composition is cross-linked to form silicone rubber with a degree of cross-linking of at least more than 50%.

2. Adhesive composite (1) according to claim 1, **characterised in that** the thermoplastic polymer material of the first layer (2) is selected from a polyolefin homopolymer and / or polyolefin copolymer, preferably a polypropylene (PP) or a polyethylene (PE) or a polybutylene (PB), a cyclic polyolefin copolymer (COC, COP), a cross-linked polyolefin, preferably a cross-linked polyethylene (PE-X), a poly-alpha-olefin copolymer, a polyolefin elastomer, an ionomer, a polyvinyl chloride, a polyamide, a polyamide copolymer, a polyester, a polyester copolymer, a polystyrene, a polystyrene copolymer, a methyl methacrylate acrylonitrile butadiene styrene copolymer, an acrylic ester-styreneacrylonitrile copolymer, a styrene acrylonitrile copolymer, a styrene methyl methacrylate copolymer, a polycarbonate, an acrylate resin, an acrylate copolymer (EBA, EMA), a polymethyl methacrylate, a poly(meth)acrylate, a polyphenylene sulfone, a polysulfone, a polyethersulfone, a polyphenylene oxide, a polyphenylene sulfide, a polyacetate, a polyacetate copolymer, a polyacetal (POM), a polyurethane, a polyether, a polyetherimide, a polyamide-imide, a polyimide, a thermoplastic polyimide, a polyphthalamide, a polyketone, polyetherketone, polyetheretherketone, a polyetherketoneketone, a polyaryletherketone, a fluorohomopolymer, a fluorocopolymer, a fluorine-containing polyurethane, a polyxylene, a liquid crystal polymer, a cellulose polymer, a polylactic acid, a polymer of renewable raw materials, a high-performance thermoplastic, a thermoplastic elastomer, which is present as a homo- and / or copolymer selected from TPO = olefin-based thermoplastic elastomers, TPV = cross-linked olefin-based thermoplastic elastomers, TPU = urethane-based thermoplastic elastomers, TPE-E = thermoplastic polyester elastomers, TPE-S = styrene block copolymers (SBS, SEBS, SEPS, SEEPS and MBS), TPE-A = thermoplastic copolyamides, e.g. PEBAX, a cross-linked or partly cross-linked thermoplastic or such an elastomer, a polymer modified from these by grafting with amino and / or imino and / or amido and / or epoxy and / or hydroxy and / or carbonic acid and / or sulphonic acid and / or sulphonic acid and / or methacrylic acid and / or maleic anhydride groups and / or a mixture manufacturable from these and / or a copolymer manufacturable from these and / or a blend composition manufacturable from these, and / or that the thermosetting polymer material of the first layer (2) is selected from a prepolymer and / or resin that can be cross-linked to form a thermoset and are selected from a phenolic resin and / or an epoxy resin and / or a phenolic epoxy resin and / or a benzoxazine resin and / or a cyanate resin and / or a melamine resin and / or a mixture manufacturable from these and / or a copolymer manufacturable from these and / or a blend composition manufacturable from these.

3. Adhesive composite (1) according to claim 1 or 2, **characterised in that** the silicone polymer composition is selected from a peroxide curing and / or an addition curing and / or a condensation curing system.

4. Adhesive composite (1) according to one of the preceding claims, **characterised in that** the silicone polymer composition contains at least one adhesion-enhancing component, selected from a thermoplastic and / or a silicone rubber and / or a silicone rubber-thermoplastic hybrid system and / or adhesion-enhancing additives or a blend composition of the above.

5. Adhesive composite (1) according to one of the preceding claims, **characterised in that** the particles (4) have magnetic and / or paramagnetic and / or ferromagnetic and / or ferrimagnetic and / or antiferrimagnetic and / or superparamagnetic properties and are selected from metals and / or metal oxides and / or mixed metal oxides and / or metal complex compounds and / or metal carbonyl compounds, in particular iron carbonyl compounds, such as pentacarbonyl iron, for example, and / or metal salt compounds and / or metal nitride compounds, such as iron nitride, for example, and / or metal compounds and / or metal compositions and / or metal alloys, in particular ferromagnetic alloys and Heusler alloys.

6. Adhesive composite (1) according to one of the preceding claims, **characterised in that** the proportion of particles in the silicone polymer composition is 2 to 40 weight percent, preferably 5 to 35 weight percent and particularly preferably 8 to 30 weight percent.

7. Adhesive composite (1) according to one of the preceding claims, **characterised in that** an adhesion-promoting layer (5) is arranged between the first layer (2) and the second layer (3).

8. Adhesive composite (1) according to one of the preceding claims, **characterised in that** the energy is generated from a magnetic field by an alternating magnetic field or that the source that emits electromagnetic radiation is a microwave source or a radio wave source.

9. Component (6) with at least one adhesive composite (1) according to any one of claims 1 to 8.

10. Component (6) according to claim 9 in the form of a seal or a hose, in particular a braided sleeve, or an edge element or a closing part or a profile.

## Revendications

1. Composite adhésif (1) composé d'une première couche (2), qui contient un matériau polymère thermoplastique ou est constituée d'un matériau de ce type et/ou qui contient un matériau polymère thermodurcissable ou est constituée d'un matériau de ce type, et d'au moins une deuxième couche (3) reliée à celle-ci composée d'un caoutchouc silicone, dans lequel le composite adhésif (1) peut être obtenu par un procédé présentant des étapes suivantes :
(a) de fourniture de la première couche (2),
(b) de disposition d'une composition polymère de silicone non durcie en tant que deuxième couche (3) au niveau de la première couche (2),
(c) d'exposition à l'action d'une énergie aux fins de la réticulation de la composition polymère de silicone pour donner le caoutchouc silicone,
**caractérisé en ce que**
la composition polymère de silicone non durcie contient des particules (4), qui génèrent de l'énergie thermique par l'action d'une énergie issue d'un champ magnétique et/ou d'une source, qui émet un rayonnement électromagnétique, ce qui permet de réticuler la composition polymère de silicone pour donner le caoutchouc silicone avec un degré de réticulation supérieur au moins à 50 %.

2. Composite adhésif (1) selon la revendication 1, **caractérisé en ce que** le matériau polymère thermoplastique de la première couche (2) est choisi parmi un homo- et/ou copolymère de polyoléfine, de préférence un polypropylène (PP) ou un polyéthylène (PE) ou un polybutylène (PB), un copolymère de polyoléfine cyclique (COC, COP), une polyoléfine réticulée, de préférence un polyéthylène réticulé (PE-X), un copolymère de poly-alpha-oléfine, un élastomère de polyoléfine, un ionomère, un chlorure de polyvinyle, un polyamide, un copolymère de polyamide, un polyester, un copolymère de polyester, un polystyrène, un copolymère de polystyrène, un copolymère méthylméthacrylate-acrylonitrile-butadiène-styrène, un copolymère acrylester-styrène-acrylonitrile, un copolymère styrène-acrylonitrile, un copolymère styrène-méthylméthacrylate, un polycarbonate, une résine acrylate, un copolymère d'acrylate (EBA, EMA), un polyméthylméthacrylate, une poly(méth)acrylate, un polyphénylènesulfone, un polysulfone, un polyéthersulfone, un oxyde de polyphénylène, un sulfure de polyphénylène, un polyacétate, un copolymère de polyacétate, un polyacétal (POM), un polyuréthane, un polyéther, un polyétherimide, un polyamide-imide, un polyimide, un polyimide thermoplastique, une polyphtalamide, une polycétone, une polyéthercétone, une polyétheréthercétone, une polyéthercétonecétone, une polyaryléthercétone, un fluorohomoplymère, un fluorocopolymère, un polyuréthane fluoré, un polyxylène, un polymère à cristaux liquides, un polymère cellulosique, un acide polylactique, un polymère composé de matières premières renouvelables, un thermoplastique haute performance, un élastomère thermoplastique, lequel est présent sous la forme d'un homo- et/ou copolymère, choisi parmi TPO = élastomères thermoplastiques à base d'oléfine, TPV = élastomères thermoplastiques réticulés à base d'oléfine, TPU = élastomères thermoplastiques à base d'uréthane, TPE-E = élastomères de polyester thermoplastiques, TPE-S = copolymères en bloc de styrène (SBS, SEBS, SEPS, SEEPS et MBS), TPE-A = copolyamides thermoplastiques, p. ex. PEBAX, un thermoplastique réticulé ou en partie réticulé ou un élastomère de ce type, un parmi lesdits polymères modifiés par greffage avec des groupes hybrides amino et/ou imino et/ou amido et/ou époxy et/ou hydroxy et/ou acide carboxylique et/ou acide sulfonique et/ou acide méthacrylique et/ou acide maléique et/ou un parmi lesdits mélanges pouvant être fabriqués et/ou un parmi lesdits copolymérisats pouvant être fabriqués et/ou une parmi lesdites compositions mixtes pouvant être fabriquées, et/ou que le matériau polymère thermidurcissable de la première couche (2) est choisi parmi un prépolymère pouvant être réticulé en une matière thermodurcissable et/ou une résine, choisie parmi une résine phénolique et/ou une résine époxy et/ou une résine époxy-phénolique et/ou une résine benzoxazine et/ou une résine cyanate et/ou une résine mélamine et/ou un parmi lesdits mélanges pouvant être fabriqués et/ou un parmi lesdits copolymérisats pouvant être fabriqués et/ou une parmi lesdites compositions mixtes pouvant être fabriquées.

3. Composite adhésif (1) selon la revendication 1 ou 2, **caractérisé en ce que** la composition polymère de silicone est choisie parmi un système peroxyde et/ou un système d'addition et/ou un système à réticulation par condensation.

4. Composite adhésif (1) selon l'une quelconque des revendications précédentes, **caractérisé en ce que** la composition polymère de silicone contient au moins un composant promoteur d'adhérence choisi parmi un thermoplastique et/ou un caoutchouc silicone et/ou un système hybride de caoutchouc silicone et de thermoplastique et/ou des additifs promoteurs d'adhérence ou une composition mixte des éléments susmentionnés.

5. Composite adhésif (1) selon l'une quelconque des revendications précédentes, **caractérisé en ce que** les particules (4) présentent des propriétés magnétiques et/ou paramagnétiques et/ou ferromagnétiques et/ou ferrimagnétiques et/ou antiferrimagnétiques et/ou superparamagnétiques et sont choisies parmi des métaux et/ou des oxydes métalliques et/ou des oxydes métalliques mixtes et/ou des composés complexes métalliques et/ou des composés carbonyle métalliques, en particulier des composés carbonyle de fer, tels que du fer pentacarbonyle, et/ou des composés de sel métallique et/ou des composés de nitrure métallique, tels que du nitrure de fer, et/ou des composés métalliques et/ou des compositions métalliques et/ou des alliages métalliques, en particulier des alliages ferromagnétiques et des alliages Heusler.

6. Composite adhésif (1) selon l'une quelconque des revendications précédentes, **caractérisé en ce que** la fraction de particules dans la composition polymère de silicone va de 2 à 40 % en poids, de manière préférée de 5 à 35 % en poids et de manière particulièrement préférée de 8 à 30 % en poids.

7. Composite adhésif (1) selon l'une quelconque des revendications précédentes, **caractérisé en ce qu'**une couche de promotion d'adhérence (5) est disposée entre la première couche (2) et la deuxième couche (3).

8. Composite adhésif (1) selon l'une quelconque des revendications précédentes, **caractérisé en ce que** l'énergie issue d'un champ magnétique est générée par un champ alternatif magnétique, ou que la source, qui émet un rayonnement électromagnétique, est une source de micro-ondes ou une source d'ondes radio.

9. Composant (6) avec au moins un composite adhésif (1) selon l'une quelconque des revendications 1 à 8.

10. Composant (6) selon la revendication 9 sous la forme d'un joint d'étanchéité ou d'un tuyau flexible, en particulier d'un tuyau flexible tressé ou d'un élément d'arête ou d'une partie de fermeture ou d'un profil.
